# EUROPEAN PATENT SPECIFICATION

(11) **EP 1 894 476 B1**
(45) Date of publication and mention of the grant of the patent: **16.05.2012**
(21) Application number: 07250075.4
(22) Date of filing: 09.01.2007
(51) Int. Cl.: A23G 4/04

(54) **Apparatus and method for making chewing gum pieces**
Vorrichtung und Verfahren zur Herstellung eines Satzes Kaugummis
Appareil et procédé pour fabriquer des morceaux de gomme à mâcher

(30) Priority: 01.09.2006 US 469625
(43) Date of publication of application: 05.03.2008
(73) Proprietor: Kent Gida Maddeleri Sanayii Ve Ticaret Anonim Sirketi, 41400 Kocaeli (TR)
(72) Inventor: Acar, Nesim, Istanbul 34460 (TR)
(74) Representative: Chettle, Adrian John

(56) References cited:
- EP-B- 1 082 024
- WO-A-02/19835
- WO-A-99/65324
- US-A- 4 940 594
- US-B1- 6 280 780

## Description

The present invention relates to chewing gum, and more particularly relates to chewing gum in the form of discrete pellets or pieces of generally square or rectangular plan shape and to devices and methods for making such chewing gum pieces.

Both unfilled and filled chewing gum pieces of various shapes have been developed and sold for many years by the assignee of the present application as well as others. As used herein, the term "chewing gum piece" refers to a discrete piece of chewing gum in the form of a tablet, pellet, pillow, dragee, or the like, as distinguished from a "stick" of gum as typically produced by a rolling and scoring process. Gum pieces having the above-noted shapes typically cannot be formed by the rolling and scoring process. Furthermore, filled gums cannot be produced by the conventional rolling and scoring process. Such filled or unfilled gum pieces are often coated with a hard outer coating or shell.

A filled chewing gum piece has an internal cavity that is filled with either a liquid filling or a powder filling. The assignee of the present application has produced and sold, and continues to produce and sell, hard-coated liquid-filled gum pieces of generally "lemon-shaped" configuration, as well as hard-coated powder-filled gum pieces of generally "lentil-shaped" configuration and hard-coated powder-filled gum pieces of round form.

The above-noted lemon-shaped filled gum pieces are produced by extruding a pair of continuous filled gum ropes each having a circular cross-sectional shape, cooling the gum ropes in a cooling device, and cutting discrete lengths of the ropes into individual gum pieces, each length of rope being cut into pieces one at a time using a cutting device. A cam-type cutter is employed for cutting the continuous gum ropes into the discrete lengths, and then each length of gum rope is passed one at a time between a pair of rotating cutting rollers each of which has circumferential ribs or ridges spaced apart along the length of the roller. The two cutting rollers are movable back and forth in the direction of their rotational axes, toward and away from each other. A third roller is positioned adjacent the cutting rollers to constrain the length of gum rope so that it is effectively cut by the cutting rollers. The cutting rollers are moved apart to receive a length of gum rope, and then are moved back toward each other to cut the rope. Each length of gum rope has its longitudinal axis parallel to the rotational axes of the cutting rollers as it is cut into pieces. The resulting gum pieces have a shape that can be described as irregularly spherical or lemon-shaped. The process and apparatus used for making such lemon-shaped gum pieces is not suitable for making square or rectangular gum pieces.

### BRIEF SUMMARY OF THE INVENTION

The present invention represents a further development in the field of production of gum pieces, particularly adapted to the production of gum pieces that are square or rectangular in plan shape. By "plan shape" is meant the shape of the gum piece as viewed in a direction perpendicular to the plane in which the gum piece has its maximum length.

According to one aspect of the invention, there is provided an apparatus in accordance with claim 1 appended hereto.

In a preferred embodiment of the invention directed to the production of filled gum pieces, the apparatus further comprises a center filling mechanism having a filler tube extending through the die orifice of the extruder, and a feed passage extending through the extruder head and connecting with the filler tube for feeding a filling through the filler tube, such that the gum rope extruded through the die orifice is formed to have a channel filled with the filling. The center filling mechanism can feed a liquid filling or a powder filling into the channel of the gum rope. The center filling mechanism in one embodiment for producing liquid-filled gum pieces further comprises an air tube concentrically positioned within the liquid filler tube and coupled with an air supply such that air and liquid filling are discharged together for filling the channel in the gum rope.

The gum rope entering the cooling tunnel has substantially the same cross-sectional size and shape as extruded by the extruder, and thus no sizing of the gum rope is performed or needed prior to cooling the gum rope in preparation for cutting. The gum rope as extruded has substantially the cross-sectional size and shape that it has as it enters the cutting rollers, and only a small fine-tuning of the size and shape (performed by the calibrating rollers) is necessary prior to cutting. The extruder, for example, can extrude the gum rope to have a circular, elliptical, or oval cross-sectional shape, depending upon the desired cross-sectional shape of the gum pieces to be produced.

The extruder defines a plurality of die orifices horizontally spaced apart, each die orifice forming a gum rope. When the apparatus is configured for producing filled gum pieces, the center-filling mechanism comprises a plurality of filler tubes, one per die orifice, such that each gum rope is filled with the filling. The calibrating rollers of the cutter receive the plurality of gum ropes therebetween with the gum ropes extending parallel to and horizontally spaced apart from one another, such that the gum ropes are simultaneously calibrated for cutting. The cutting rollers likewise receive the plurality of gum ropes therebetween with the gum ropes extending parallel to and horizontally spaced apart from one another. The cutting teeth of the cutting rollers extend along a sufficient length of the rollers such that all of the gum ropes are simultaneously cut into gum pieces.

When liquid-filled gums are produced in accordance with the invention, the liquid filling can be supplied through the filler tubes by a gear pump for precisely metering the flow rate of liquid into the gum ropes. This ensures that all of the gum ropes receive the same amount of liquid filling.

In one embodiment of the invention, the apparatus includes a plurality of low-friction guides structured and arranged for guiding the gum ropes into the calibrating rollers, and/or a plurality of low-friction guides structured and arranged for guiding the gum ropes from the calibrating rollers into the cutting rollers. Each low-friction guide can comprise a channel or groove formed in a member having a rope-contacting surface made of a low-friction material such as polytetrafluoroethylene (PTFE).

The cooling tunnel in one embodiment comprises a series of individual belt conveyors each extending substantially horizontally and parallel to the machine direction and spaced apart from one another in a vertical direction such that the belt conveyors substantially lie in a vertical plane, the belt conveyors including an uppermost belt conveyor and a lowermost belt conveyor each traveling in the machine direction and a plurality of intermediate belt conveyors, wherein each belt conveyor travels in a direction opposite to the immediately prior belt conveyor, and wherein the gum ropes are threaded in a serpentine fashion through the cooling tunnel such that the gum ropes are carried along one of the belt conveyors traveling in the machine direction and then along one or more subsequent ones of the belt conveyors, finally exiting the cooling tunnel from the lowermost belt conveyor. The cooling tunnel further comprises blowers for blowing air across the gum ropes.

The belt conveyors can be driven in various ways. In a preferred embodiment, the belt conveyors are independently driven by individual drive motors. Advantageously, the drive motors are variable-speed motors whose speeds are independently controllable.

In a preferred embodiment, the belt conveyors are driven by the drive motors such that a ratio of the speed of the lowermost belt conveyor belt to the speed of the uppermost belt conveyor is greater than or equal to 1.0 and less than about 13, more preferably less than about 1.2, still more preferably less than about 1.15, and still more preferably less than about 1.1.

The apparatus can further comprise a final cooling device for cooling the gum pieces.

### BRIEF DESCRIPTION OF THE SEVERAL VIEWS OF THE DRAWING(S)

Having thus described the invention in general terms, reference wild now be made to the accompanying drawings, which are not necessarily drawn to scale, and wherein:
FIG. 1 is a top view of an apparatus for making gum pieces in accordance with one embodiment of the invention;
FIG. 2 is a front elevation of the apparatus;
FIG. 3 is a schematic representation of the extruder configured to extrude up to six filled gum ropes simultaneously,
FIG. 4 is a schematic representation of the cutter in front elevation;
FIG. 4A is a diagrammatic perspective view of low-friction guides used in connection with the cutter in accordance with one embodiment of the invention;
FIG. 5 is a schematic view of the calibrating rollers as viewed along the direction in which the gum ropes pass therethrough;
FIG. 6 depicts one of the cutting rollers in greater detail;
FIG. 6A shows a cutting tooth of the cutting rollers in greatly enlarged scale;
FIG. 7 is a diagrammatic perspective view of the cooling tunnel in accordance with one embodiment of the invention;
FIG. 8 is a side elevation of the cooling tunnel;
FIG. 9 is a top elevation of the cooling tunnel;
FIG. 10 is a perspective view of a generally rectangular gum piece made in accordance with one embodiment of the invention; and
FIG. 11 is a plan view of the gum piece, showing its generally rectangular plan shape.

### DETAILED DESCRIPTION OF THE INVENTION

The present inventions now will be described more fully hereinafter with reference to the accompanying drawings in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

The present invention is directed to the production of chewing gum pieces. A filled gum piece in accordance with the invention comprises a chewing gum composition formed into a discrete piece that defines an internal cavity. The cavity is filled with a liquid or powder filling. The chewing gum piece can also include a hard outer coating or shell. Unfilled chewing gum pieces can also be formed in accordance with the invention.

A liquid filling for gum pieces in accordance with the invention can comprise an aqueous solution containing one or more of sweeteners, flavors, cooling agents, substances to enhance production of saliva, oral care compositions, and the like. Aqueous bulk sweetener solutions such as those containing sorbitol, xylitol, lactitol, maltitol, glycerol, hydrogenated isomaltulose and other polyols, or combinations thereof, may be used in the liquid filling. Thickeners can also be included, such as gelatin, xanthan gum, guar gum, acacia gum, pectin, carrageenan, cellulose gum, or the like.

A powder filling likewise can comprise one or more of sweeteners, flavors, cooling agents, substances to enhance production of saliva, oral care compositions, and the like. One or more of the ingredients of the powder filling can be provided in the form of encapsulated material.

Powder bulk sweeteners that can be used in the powder filling may include sweeteners such as sugar alcohols, including but not limited to sorbitol, mannitol, xylitol, hydrogenated starch hydrolysates, lactitol, maltitol, hydrogenated isomaltulose, or the like, alone or in combination. High-intensity sweeteners may also be used and are commonly used with sugarless bulk sweeteners. These may include but are not limited to sucralose, aspartame, salts of acesulfame, alitame, saccharin and its salts, cyclamic acid and its salts, glycyrrhizin, dihydrochalcones, thaumatin, monellin, and the like, alone or in combination. One or more of the ingredients of the powder filling can be provided in the form of encapsulated material.

Flavoring agents that can be used in the gum composition and/or in the liquid filling and/or in the powder filling include essential oils and artificial flavors, or mixtures thereof, including natural oils derived from plants and fruits such as citrus oils, peppermint oil, spearmint oil, other mint oils, clove oil, oil of wintergreen, anise, and the like. Artificial flavorings can comprise fruit flavors such as strawberry, raspberry, blueberry, grape, apple, cherry, banana, melon, or the like.

The gum pieces in accordance with the invention can be formed in various shapes and sizes. As one example, the gum piece can have a generally rectangular shape in plan view. The gum piece can include a pair of opposite major surfaces and each of which is generally convex in a direction away from the other major surface, although each major surface can include a portion that is generally planar or flat in at least one direction. The gum piece can have two opposite first side edges that are generally parallel to each other, and two opposite second side edges that are generally parallel to each other and generally perpendicular to the first side edges. The side edges can be substantially linear in plan view, or can be concave or convex. In cross-section, the gum piece can have a generally elliptical or oval shape (although, as noted, the major surfaces can include portions that are generally flat or linear in at least one direction).

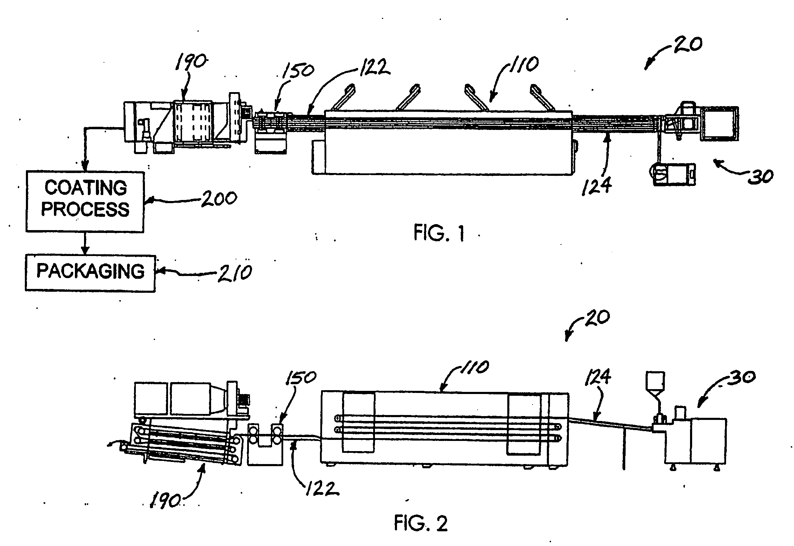

An apparatus **20** for making filled gum pieces in accordance with one embodiment of the invention is shown in diagrammatic fashion in FIGS. 1 and 2. The apparatus includes an extruder and center filling assembly **30** for extruding a hollow gum rope that has a channel filled with a filling, a cooling tunnel **110** for cooling the gum rope, a cutter **150** for cutting the gum rope into discrete gum pieces, and a final cooling unit **190** for cooling the gum pieces. The gum pieces discharged from the final cooling unit can then be subjected to further processing such as a coating process **200** and a packaging process **210** (FIG. 1).

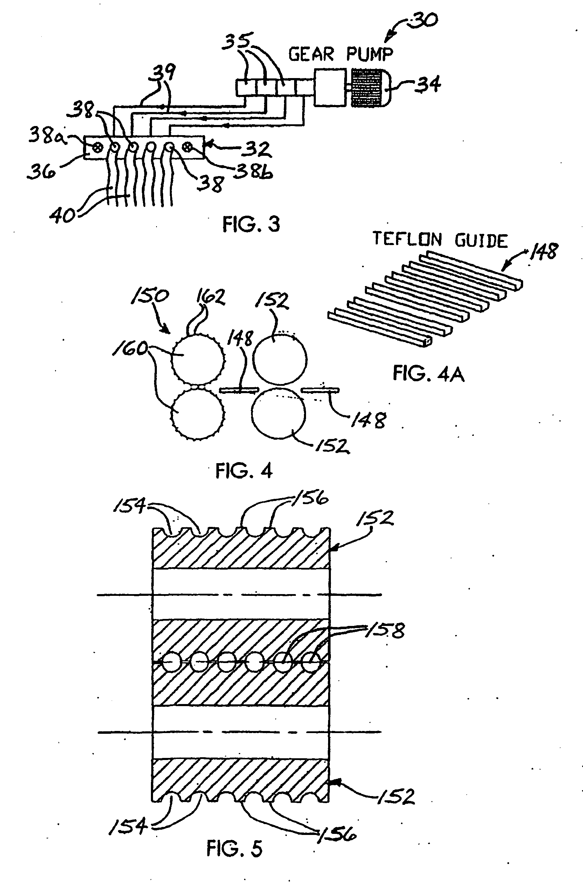

With reference to FIG. 3, the extruder and center filling assembly **30** includes an extruder head **32** that defines a chamber for receiving a molten and flowable gum composition from a suitable device such as an extruder screw feed mechanism coupled with the extruder head. The extruder head further includes a die **36** defining a plurality of die orifices **38** through which the molten gum composition is forced from the chamber under pressure so as simultaneously to extrude a plurality of ropes **40** of gum from the die orifices. The die orifices 38 are spaced apart in a horizontal direction such that the gum ropes extruded from the extruder are spaced apart horizontally and extend generally parallel to one another as they exit the extruder. The die 36 is illustrated as defining six orifices **38,** two of which **(38a** and **38b)** are shown as being closed such as by shut-off valves (not shown) or the like so that no gum ropes are extruded from them. The die **36** can be variously configured as desired for extruding various numbers of gum ropes up to six. In FIG. 3, four gum ropes are shown being extruded. Of course, the die can be configured to allow for a maximum number of gum ropes that is less than or greater than six. For example, in one embodiment, the die can be configured with 10 orifices for extruding up to 10 gum ropes.

The extruder assembly **30** further comprises a center filling mechanism having a filler tube **39** extending through each die orifice **38.** The extruder head defines feed passages (not shown) extending through the extruder head and connecting with the filler tubes **39** for feeding a filling through the filler tubes. Accordingly, the gum rope **40** extruded through each die orifice 38 is formed to have a channel filled with the filling. When a liquid filling is employed, a modular gear pump **34** advantageously can be employed for feeding the liquid through the filler tubes **39.** The modular gear pump has a plurality of gear elements **35,** one for each filler tube **39.** The gear pump has the advantage that the gear elements precisely meter the flow rate of liquid into each filler tube and thus ensure that all of the gum ropes receive the same amount of liquid filling.

When the apparatus is used for making liquid-filled gum pieces, the center filling mechanism can include an air tube (not shown) that extends down the middle of each filler tube 39 for blowing air under a slightly superatmospheric pressure into the liquid-filled channel of the gum rope to assist in the filling of the channel and to prevent the development of a vacuum in the liquid-filled channel that could cause the gum rope or the finished gum pieces to shrink or distort. The air tube is connected to an air feed passage (not shown) in the extruder head 32, which receives pressurized air from a suitable source (not shown). The center-filling mechanism described in commonly owned, co-pending U.S. patent application Serial No. 11/392,430 ("the '430 application") filed on March 29, 2006, the entire disclosure of which is incorporated herein by reference, is suitable for use in the present invention, and can be suitably adapted with multiple filler tubes for use in the multiple-rope extruder of the present invention.

As noted, the filling can comprise either a liquid or a powder material. When the apparatus is employed for making powder-filled gum pieces, the center filling mechanism includes a powder hopper (not shown) that contains the powder filling. The hopper has a discharge tube (not shown) through which the powder filling is discharged with the aid of a feed screw (not shown) driven by a motor (not shown). The motor also drives a rotating agitator (not shown) disposed in the hopper for agitating the powder filling to prevent agglomeration, clumping, or caking of the powder filling. The powder filling is discharged from the discharge tube into a plurality of powder feed passages of the extruder head 32. The powder feed passages feed powder into the filler tubes that respectively extend through the die orifices **38** of the extruder head. A rotating agitator (not shown) can extend down the center of each powder feed passage and filler tube for agitating the powder filling to prevent agglomeration, clumping, or caking of the powder filling so that the powder filling flows smoothly and continuously through the powder filler tube. The agitator is driven by a motor (not shown). A suitable center filling mechanism for filling a gum rope with a powder filling is described in the '430 application. While the powder filling mechanism described in the '430 application is for an extruder that extrudes a single gum rope, a similar type of mechanism with multiple powder filler tubes can be employed in the multiple-rope extruder of the present invention.

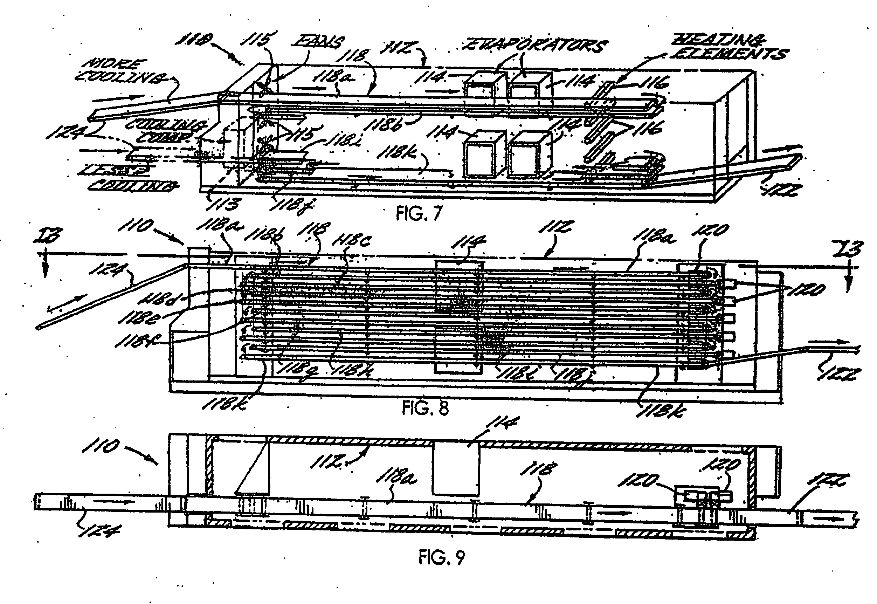

After the gum ropes exit the extruder **30,** they are fed through the cooling tunnel **110** to cool and dry the gum ropes prior to cutting. It is to be noted that the gum ropes undergo no sizing process between the extruder and the cooling tunnel. The cooling tunnel is shown in detail in FIGS. 7 through 9. The cooling tunnel is a multi-story cooling tunnel that includes an enclosure **112** that forms an interior space substantially isolated from the surroundings outside the enclosure. The enclosure can be formed so that at least parts of the enclosure are transparent to allow viewing of the progress of the gum ropes through the tunnel. At one end of the enclosure, a refrigerant compressor **113** of a refrigeration device is arranged for compressing a suitable refrigerant and supplying the refrigerant through suitable tubing (not shown) to a series of evaporators **114** disposed in the enclosure. Fans **115** for blowing air over the coils of the evaporators are mounted in the enclosure such that cooled air is circulated through the enclosure and over the gum ropes progressing therethrough. Additionally, heaters **116** are mounted in the enclosure for controlling the temperature of the air being circulated. This air conditioning system ensures that air at the desired temperature and desirably low relative humidity is circulated through the enclosure to cool and dry the gum ropes.

The cooling tunnel includes a series of vertically spaced, individual belt conveyors **118** arranged inside the enclosure **112.** The belt conveyors extend parallel to the length direction of the enclosure **112** and parallel to one another, and each is substantially horizontal. The belt conveyors **118** thus lie substantially in a vertical plane. The conveyors include an uppermost belt conveyor **118a** and a lowermost belt conveyor **118k,** and nine intermediate belt conveyors **118b** through **118j** disposed between the uppermost and lowermost conveyors. Each belt conveyor comprises a belt formed in an endless loop about suitable rollers or sprockets, and each belt is driven by its own separate drive motor 120. The belt conveyors **118a, 118c, 118e, 118g, 118i,** and **118k** all are driven so that the upper flight of the respective belt travels in the machine direction (left to right in FIGS. 7 through 9). The other belt conveyors **118b, 118d, 118f, 118h, and 118j** have their upper flights traveling opposite to the machine direction (right to left in the drawings).

The belt conveyors **118** are structured and arranged such that the gum ropes carried along the uppermost belt conveyor **118a** fall off the downstream end of the upper flight of the belt onto the next belt conveyor **118b.** The conveyor **118b** extends slightly farther to the right in the drawings than the uppermost conveyor so that it catches the ropes falling from the uppermost conveyor. The second conveyor **118b** then carries the ropes to the-left and they fall down to the next conveyor **118c** in the same manner, and so forth. The gum ropes are finally carried by the lowermost conveyor **118k** to a discharge conveyor **122** that advances the ropes to the cutter **150.**

The gum ropes are carried into the cooling tunnel **110** by an inlet conveyor **124,** through an entrance opening formed in the enclosure **112.** In accordance with one embodiment of the invention, the tunnel includes two or more alternative entrance openings. A first opening leads the gum ropes onto the uppermost conveyor **118a.** A second alternative opening leads the gum ropes onto an intermediate conveyor such as conveyor **118i** as shown, or onto the lowermost conveyor **118k.** The first opening is used when maximum residence time and cooling of the gum ropes are required. The second opening is used when less residence time and cooling are required. The inlet conveyor **124** advantageously is configured so that it can be readily moved from one entrance to another, such as through a quick-connect coupling or the like.

Each belt conveyor **118** advantageously carries the gum ropes slightly faster than the immediately preceding conveyor, the objective being to prevent the gum ropes from "snaking" or bending in a horizontal side-to-side fashion. Such snaking could have adverse effects on the quality of the gum pieces produced, and in extreme cases could result in the ropes becoming jammed in the cooling tunnel. To prevent such snaking, the individual drive motors **120** are controlled so that a gradual increase in speed occurs through the tunnel. The cooling tunnel can include one or more sensors (not shown) for detecting the gum ropes' position on each belt conveyor **118.** If the ropes move out of the desired straight position by more than a predetermined amount, then an alarm can be given to alert the machine operator that an abnormal condition may exist in the tunnel. It is also possible to control the motor speeds based on the sensor output signals so as to automatically reduce any detected snaking.

The speed increase through the cooling tunnel can be varied depending upon the requirements in each case. Generally, the ratio of the outlet speed (i.e., the speed of the lowermost conveyor **118k**) to the inlet speed (i.e., the speed of the uppermost conveyor **118a**) will be greater than or equal to 1.0 and less than about 1.3, more preferably less than about 1.2, still more preferably less than about 1.15, still more preferably less than about 1.1, and even more preferably less than about 1.05.

The cooled gum ropes exit from the cooling tunnel **110** and are then simultaneously cut into discrete gum pieces in the cutter **150.** The cutter is illustrated diagrammatically in FIGS. 4, 4A, 5, 6, and 6A. FIG. 4 shows the cutter as comprising a pair of calibrating rollers **152** and a pair of cutting rollers **160.** The calibrating rollers **152** are structured and arranged for making "fine-tuning" adjustments to the cross-sectional size and shape of the gum ropes before they enter the cutting rollers to be cut into pieces. In accordance with the invention, the extruder **30** extrudes the gum ropes to have a cross-sectional size and shape that is substantially the same as that of the finished gum pieces to be produced. Thus, no rope sizer is required for sizing and shaping the gum ropes, in contrast to conventional gum-making machines of this type in which a rope sizer is typically employed in order to substantially reduce the diameter of the gum rope prior to cooling and cutting. However, some small adjustments of the gum ropes may be needed in order to optimize the size and/or shape of the gum ropes before they are cut. The calibrating rollers **152** are employed for this purpose,

FIG. 5 shows the calibrating rollers **152** in greater detail. The calibrating rollers comprise solid or hollow (hollow being illustrated) generally cylindrical rollers arranged with their outer surfaces in contact with each other so as to form a nip therebetween. The calibrating rollers are made of a suitably rigid material approved for food contact, such as stainless steel. The calibrating rollers can be cooled to help prevent sticking to the gum ropes. For example, the calibrating rollers can include internal coolant passages (not shown) for passing a coolant therethrough to cool the outer surfaces of the rollers. The outer surface of each roller includes a plurality of circumferential grooves or channels **154** spaced apart along the axial length of the roller. Each calibrating roller includes lands **156** between the channels **154**. The lands **156** of one calibrating roller **152** are in close proximity with the lands of the other calibrating roller, and the channels **154** in the two calibrating rollers are aligned such that they collectively form passages **158** for the gum ropes to pass through. A small gap (e.g., about 0.05 to 0.2 mm, preferably about 0.1 mm) can exist between the lands **156** of the calibrating rollers. The calibrating rollers **152** are both rotatably driven by a suitable drive mechanism (not shown) at the same rotational speed in opposite directions such that the calibrating rollers serve not only to fine-tune or calibrate the size/shape of the gum ropes but also to convey the gum ropes from the cooling tunnel **110** into the cutting rollers **160.**

The size and shape of the channels **158** defined between the calibrating rollers **152** determine the size and shape of the gum ropes fed into the cutting rollers **160**. As noted, the calibrating rollers do not make dramatic changes in the size or shape of the gum ropes, but only impart small "fine-tuning" adjustments to the size and/or shape so the gum ropes will be in appropriate condition for cutting in the cutting rollers. For example, the gum ropes may be reduced in height or thickness by about 0.5 mm or less in passing through the calibrating rollers. Although the channels **158** are illustrated as being generally semi-circular in FIG. 5, alternatively the channels can have other shapes, such as half-oval, half-elliptical, etc., depending on the shape of the gum pieces to be produced.

As shown in FIGS. 4 and 4A, the cutter **150** can include low-friction guides **148** for guiding the gum ropes into the calibrating rollers **152** and/or for guiding the ropes into the cutting rollers **160.** The low-friction guides **148** serve to ensure that the gum ropes are aligned with the passages **158** between the calibrating rollers **152** and/or to ensure that the ropes remain straight and parallel to one another as they pass between the cutting rollers **160.** The low-friction guides **148** can comprise a member (or a plurality of separate members) defining grooves or channels through which the gum ropes are conveyed, the member(s) being formed of a low-friction material, or at least the rope-contacting surfaces of the member(s) being formed of the low-friction material. A suitable low-friction material is polytetrafluoroethylene (PTFE), such as the products sold under the TEFLON® trademark. The low-friction guides, for example, can comprise metal (e.g., stainless steel) channel members coated with PTFE, or solid PTFE channel members.

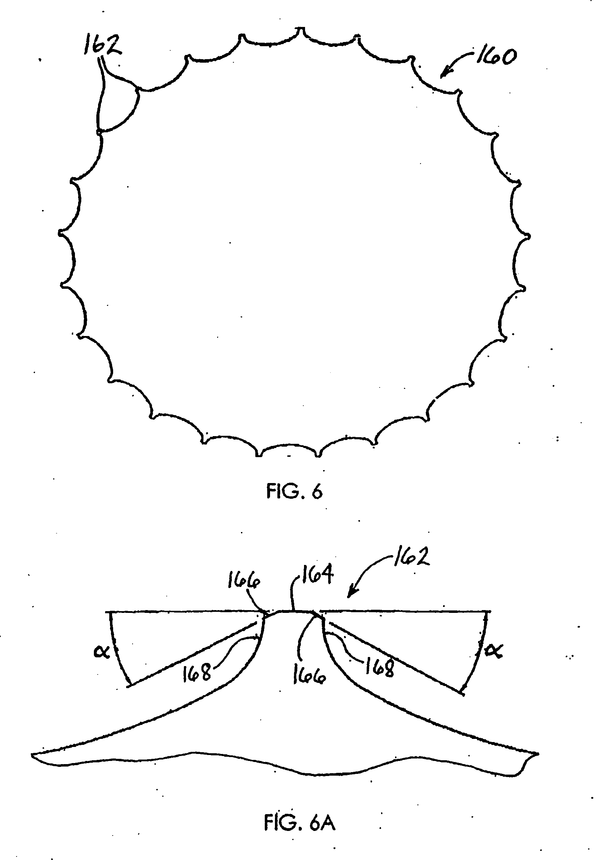

The cutting rollers **160** are now described with reference to FIGS. 6 and 6A. The cutting rollers **160** comprise solid or hollow generally cylindrical rollers arranged so as to form a nip therebetween. The cutting rollers are made of a suitably rigid material approved for food contact, such as stainless steel. The cutting rollers can be cooled to help prevent sticking to the gum ropes. For example, the cutting rollers can include internal coolant passages (not shown) for passing a coolant therethrough to cool the outer surfaces of the rollers. Each cutting roller defines a plurality of cutting teeth **162** circumferentially spaced about the outer periphery of the roller. The cutting teeth of the cutting rollers extend along a sufficient length of the rollers such that all of the gum ropes fed between the cutting rollers are simultaneously cut into gum pieces. The two cutting rollers **160** are rotatably driven in synchronism with each other at the same rotational speed, in opposite rotational directions, such that the cutting teeth 162 of one roller are always aligned with the cutting teeth **162** of the other roller. The rotational speed of the cutting rollers **160** is not less than that of the calibrating rollers **152** and preferably is slightly faster than that of the calibrating rollers in order to prevent snaking of the gum ropes between the calibrating rollers and cutting rollers. For example, the cutting rollers can rotate about 0.1 % faster than the calibrating rollers. The cutting rollers and calibrating rollers advantageously are driven by separate frequency-controtled DC motors to permit their speeds to be essentially infinitely adjustable independently of each other, and to be controlled accurately. The gum ropes are fed between the cutting rollers **160** and the cutting teeth **162** come together to cut each gum rope into discrete pieces each of which has a filling in its internal cavity. As the teeth come together, they both cut the gum rope and seal the cut edges so as to seal the filling inside the gum pieces. A small gap (e.g., about 0.05 to 0.2 mm, preferably about 0.1 mm) can exist between the cutting teeth **162** of one cutting roller and the cutting teeth **162** of the other cutting roller when the teeth are in their closest proximity to each other. The gum ropes can have a speed of approximately 10 m/min to 20 m/min as they enter the cutting rollers, more preferably about 12 m/min to 18 m/min, and in one embodiment the gum ropes have a speed of about 15 m/min.

The particular structure of the cutting rollers **160** and their cutting teeth **162** will depend in each case on the shape of the gum pieces to be produced. In general, the cutting teeth are structured to cut each gum rope along cut lines that are transversely extending (i.e., perpendicular to the longitudinal axes of the gum ropes, the gum ropes being conveyed in a direction parallel to their longitudinal axes and perpendicular to the axes of the cutting rollers). In a preferred embodiment, the gum pieces to be produced have a rectangular shape in plan view, with the two shorter end edges of each piece being the edges cut by the cutting teeth **162,** the two longer edges being perpendicular to the shorter end edges and being formed by the side walls of the gum rope. Accordingly, the cutting teeth **162** for producing such rectangular gum pieces are linear and parallel to the rotational axes of the cutting rollers **160.**

FIGS. 6 and 6A show the cutting teeth **162** and cutting roller **160** in accordance with one embodiment of the invention. Each cutting tooth **162** extends parallel to the axis of the cutting roller and has a cross-sectional shape that is uniform along the length of the tooth (i.e., along the axial direction of the cutting roller). The tooth in cross-section has a radially outermost cutting and sealing surface **164** that is planar and parallel to the longitudinal axis of the roller. The cutting and sealing surface **164** can be relatively narrow in the circumferential direction, e.g., about 0.6 to 1.0 mm, preferably about 0.8 mm in width. The cutting and sealing surface **164** is flanked on both sides (in the circumferential direction) by planar beveled surfaces 166 that form an acute angle α relative to the cutting and sealing surface **164.** The angle a can be about 15° to about 45°, preferably about 30°. The beveled surfaces **166** can be narrower than the cutting and sealing surface **164,** for example about 0.3 to 0.6 mm, preferably about 0.4 mm in width as measured in the direction parallel to the plane of the cutting and sealing surface **164.** The tooth has opposite surfaces 168 that descend (i.e., radially inwardly relative to the cutting roller axis) from the beveled surfaces **166** and are approximately perpendicular to the cutting and sealing surface **164** at their radially outermost points where they join the beveled surfaces **166.** The opposite surfaces **168,** however, are concave in the radially outward direction. Between two adjacent cutting teeth **162,** the outer surface of the cutting roller **160** is likewise concave and smoothly blends with the opposite surfaces **168** of the cutting teeth. The cross-sectional shape of each cutting roller **160** can be constant along at least the lengthwise portion of the cutting roller that is active in cutting the gum ropes. The radial distance between the cutting and sealing surface **164** and the smallest-diameter point of the roller (located midway between adjacent teeth in the circumferential direction), which distance can be referred to as the "height" of the tooth, can be approximately 6 mm to 9 mm in one embodiment. However, it will be recognized that the cutting rollers can have differently shaped teeth and/or a different number of teeth, depending on the needs in each particular case.

The gum pieces produced by the cutter **150** are conveyed by a suitable conveyor to the final cooling unit **190** for further cooling. The final cooling unit **190** can comprise any suitable type of cooling unit for cooling the gum pieces. In one embodiment, the final cooling unit comprises a cooling tunnel of the type described for the cooling tunnel **110** above. The gum pieces travel on the various conveyor belts through the cooling tunnel and are discharged into receptacles for transfer to further operations.

Such further operations can include, for example, a coating process **200** (FIG.1) for coating the gum pieces with a hard coating or shell. Any suitable coating equipment may be used. Examples of such equipment include traditional coating pans as well as newer, high-technology systems.

In the hard coating panning procedure, the coating syrup is generally added to the gum pieces at a temperature of from about 10° C to about 90° C, and more preferably from about 30° C to about 70° C. The coating on the gum pieces may be applied in a single hard layer or in a plurality of hard layers.

In general, applying a plurality of layers involves applying a single coat, allowing the coat to dry, and then repeating the process obtains a plurality of layers. Any number of coats may be applied to the gum pieces. Preferably, the gum pieces are coated with about 30 to 70 layers.

Once a portion of syrup is applied to the gum pieces, the wet syrup coating is dispersing on the pieces and dried; such drying is done by forced-air drying in a temperature range of from about 15° C to about 45° C. The drying air should have relative humidity below 50% RH. Each application of a wet syrup coating to the gum pieces is followed by a distribution period without air and then a forced-air drying of the coating, and the coating and drying steps are alternated until the desired numbers of coating layers have been deposited on the gum pieces.

A protective and polishing layer of food-grade wax (e.g., carnauba wax or the like) or shellac resin may be applied over the hard coating, if desired, in order to protect the coating from exposure to atmospheric moisture and to impart a glossy finish to the gum pieces.

After coating, the gum pieces are subjected to a packaging operation **210** (FIG. 1) for shipment to distributors and/or retail outlets.

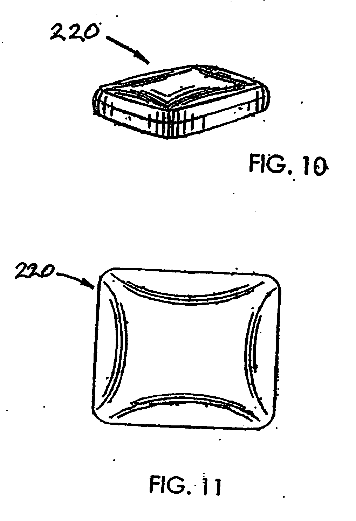

The apparatus and method of the invention can be used for producing gum pieces (filled or unfilled) of various shapes. The shape of the gum pieces is a function primarily of the shape of the extruder die orifices **38,** the shape of the grooves **154** in the calibrating rollers, and the configuration of the cutting rollers **160.** FIGS. 10 and 11 show one example of a generally rectangular plan shape gum piece **220** that can be made in accordance with the invention.

Many modifications and other embodiments of the inventions set forth herein will come to mind to one skilled in the art to which these inventions pertain having the benefit of the teachings presented in the foregoing descriptions and the associated drawings. Furthermore, although the invention is particularly advantageous for producing filled gum pieces, the invention is not limited to filled gums, but is also applicable to unfilled gums. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. An apparatus (20) for making chewing gum pieces, comprising:
an extruder (30) comprising an extruder head (32) defining a plurality of horizontally spaced-apart die orifices (38) through which a molten gum composition is forced under pressure so as to extrude a plurality of separate gum ropes (40) from the die orifices;
a cooling tunnel (110) structured and arranged to receive the gum ropes (40) from the extruder (30) and to cool the gum ropes; and
a cutter (150) structured and arranged to receive the cooled gum ropes from the cooling tunnel, the cutter comprising a pair of rotatably driven calibrating rollers (152) that receive the plurality of gum ropes (40) simultaneously therebetween with the gum ropes extending parallel to and horizontally spaced apart from one another so as to calibrate the cross-sectional size and shape of the gum ropes for cutting, and a pair of rotatably driven cutting rollers (160) that receive the calibrated gum ropes (40) simultaneously therebetween with the gum ropes extending parallel to and horizontally spaced apart from one another, the cutting rollers defining a plurality of sets of cutting teeth (162) such that the gum ropes are simultaneously cut into gum pieces;
wherein the gum ropes (40) as extruded have substantially the same cross-sectional size and shape as the gum ropes entering the cutting rollers (160).

2. The apparatus of claim 1, wherein each cutting roller comprises a roller (160) having a plurality of circumferentially spaced cutting teeth (162) each projecting radially outwardly therefrom.

3. The apparatus of claim 2, wherein each cutting tooth (162) has a radially outermost cutting and sealing surface (164) that is substantially parallel to a rotational axis of the cutting roller.

4. The apparatus of claim 3, wherein each cutting tooth (162) has beveled surfaces (166) flanking the cutting and sealing surface.

5. The apparatus of claim 3, wherein between adjacent cutting teeth (162) each cutting roller is concave in a radially outward direction.

6. The apparatus of any preceding claim, configured for producing filled gum pieces, and further comprising a center filling mechanism having a filler tube (39) extending through a die orifice (38) of the extruder (30), and a feed device (35) connected with the filler tube for feeding a filling through the filler tube (39), such that the gum rope (40) extruded through the die orifice is formed to have a channel filled with the filling.

7. The apparatus of claim 6, wherein the filling is liquid and the feed device comprises a gear pump (35).

8. The apparatus of any preceding claim, further comprising a plurality of low-friction guides (148) structured and arranged for guiding the gum ropes (40) into the calibrating rollers (152), each low-friction guide (148) comprising a channel or groove formed in a member having a rope-contacting surface made of a low-friction material.

9. The apparatus of claim 8, further comprising a plurality of low-friction guides (148) structured and arranged for guiding the gum ropes from the calibrating rollers (152) into the cutting rollers (160), each low-friction guide comprising a channel or groove formed in a member having a rope-contacting surface made of a low-friction material.

10. The apparatus of any preceding claim, wherein the cooling tunnel (110) comprises a multi-story cooling tunnel having a series of individual belt conveyors (118) each extending substantially horizontally and parallel to the machine direction and spaced apart from one another in a vertical direction such that the belt conveyors substantially lie in a vertical plane, the belt conveyors (118) including an uppermost belt conveyor (118a) and a lowermost belt conveyor (118k) each traveling in the machine direction and at least one intermediate belt conveyor (118b-118j) disposed between the uppermost and lowermost belt conveyors, wherein each belt conveyor travels in a direction opposite to the immediately prior belt conveyor, and wherein gum rope (40) is threaded in a serpentine fashion through the cooling tunnel such that the gum rope is carried along one of the belt conveyors traveling in the machine direction and then along one or more subsequent ones of the belt conveyors, finally exiting the cooling tunnel from the lowermost belt conveyor.

11. The apparatus of any preceding claim, further comprising a final cooling device (190) for cooling the gum pieces, the final cooling device comprising a multi-story cooling tunnel.

12. A method for making chewing gum pieces, comprising the steps of:
extruding a plurality of gum ropes (40) using an extruder (30) having a plurality of horizontally spaced-apart die orifices (38) through which a molten gum composition is forced under pressure so as to extrude the plurality of separate gum ropes (40) from the die orifices;
passing the gum ropes from the extruder to a cooling tunnel (110) in which the gum ropes are cooled; and
calibrating the cross-sectional size and shape of the cooled gum ropes in preparation for cutting, using a pair of rotatably driven calibrating rollers (152) that receive the plurality of gum ropes simultaneously therebetween with the gum ropes extending parallel to and horizontally spaced apart from one another; and
cutting the calibrated gum ropes into pieces using a pair of rotatably driven cutting rollers (160) that receive the plurality of gum ropes simultaneously therebetween with the gum ropes extending parallel to and horizontally spaced apart from one another, the cutting rollers defining a plurality of sets of cutting teeth such that the gum ropes are simultaneously cut into gum pieces;
wherein the gum ropes as extruded have substantially the same cross-sectional size and shape as the gum ropes entering the cutting rollers.

13. The method of claim 12, wherein the gum ropes (40) are guided into the calibrating rollers by a plurality of low-friction guides (148).

14. The method of claim 12, wherein the gum ropes (40) are guided from the calibrating rollers into the cutting rollers by a plurality of low-friction guides (148).

15. The method of claim 12, wherein the gum ropes (40) are cooled by longitudinally advancing the gum ropes along a serpentine path through a cooling tunnel (110), the serpentine path lying substantially in a vertical plane.

16. The method of claim 15, wherein the gum ropes (40) are caused to travel the serpentine path by a series of vertically spaced, horizontal belt conveyors (118a-118k) each traveling in a horizontal direction opposite to that of the immediately prior belt conveyor.

17. The method of claim 12, comprising simultaneously extruding a plurality of separate filled gum ropes (40), each gum rope having an internal channel filled with a filling.

18. The method of claim 17, wherein the filling is a liquid, and wherein a gear pump (34) is employed for feeding the filling into the gum ropes being extruded from the extruder.

## Patentansprüche

1. Eine Vorrichtung (20) zum Herstellen von Kaugummistücken, aufweisend:
einen Extruder (30), der einen Extruderkopf (32) aufweist, der eine Mehrzahl von horizontal im Abstand voneinander angeordneten Austrittsdüsenöffnungen (38) definiert, durch die eine geschmolzene Kaugummizusammensetzung unter Druck hindurchgepresst wird, um eine Mehrzahl von getrennten Kaugummischnüren (40) aus den Austrittsdüsenöffnungen zu extrudieren,
einen Kühltunnel (110), der eingerichtet und angeordnet ist, um die Kaugummischnüre (40) aus dem Extruder (30) aufzunehmen und die Kaugummischnüre zu kühlen, und
eine Schneideeinrichtung (150), die eingerichtet und angeordnet ist, um die gekühlten Kaugummischnüre aus dem Kühltunnel aufzunehmen, wobei die Schneideeinrichtung aufweist: ein Paar von drehbar angetriebenen Kalibrierungswalzen (152), die die Mehrzahl von Kaugummischnüren (40) gleichzeitig dazwischen aufnehmen, wobei sich die Kaugummischnüre parallel zueinander und in horizontalem Abstand voneinander erstrecken, um die Querschnittsgröße und Form der Kaugummischnüre zum Schneiden zu kalibrieren, und ein Paar von drehbar angetriebenen Schneidwalzen (160), die die kalibrierten Kaugummischnüre (40) gleichzeitig dazwischen aufnehmen, wobei sich die Kaugummischnüre parallel zueinander und in horizontalem Abstand voneinander erstrecken, wobei die Schneidwalzen eine Mehrzahl von Sätzen von Schneidezähnen (162) definieren, so dass die Kaugummischnüre gleichzeitig in Kaugummistücke geschnitten werden,
wobei die Kaugummischnüre (40) extrudiert im Wesentlichen die gleiche Querschnittsgröße und Form wie die Kaugummischnüre haben, die in die Schneidwalzen (160) eintreten.

2. Die Vorrichtung gemäß Anspruch 1, wobei jede Schneidwalze eine Walze (160) aufweist, die eine Mehrzahl von umlaufend im Abstand voneinander angeordneten Schneidezähnen (162) aufweist, die davon jeweils radial in Richtung nach außen hervorstehen.

3. Die Vorrichtung gemäß Anspruch 2, wobei jeder Schneidezahn (162) eine radial äußerste Schneide- und Dichtungsfläche (164) aufweist, die im Wesentlichen parallel zu einer Drehachse der Schneidwalze ist.

4. Die Vorrichtung gemäß Anspruch 3, wobei jeder Schneidezahn (162) angeschrägte Flächen (166) aufweist, die die Schneide- und Dichtungsfläche flankieren.

5. Die Vorrichtung gemäß Anspruch 3, wobei jede Schneidwalze zwischen benachbarten Schneidezähnen (162) in einer Richtung radial nach außen konkav ist.

6. Die Vorrichtung gemäß irgendeinem vorhergehenden Anspruch, die zum Herstellen von gefüllten Kaugummistücken eingerichtet ist und ferner einen zentralen Füllmechanismus aufweist, der aufweist: ein Einfüllrohr (39), das sich durch eine Austrittsdüsenöffnung (38) des Extruders (30) hindurch erstreckt, und eine Zuführvorrichtung (35), die mit dem Einfüllrohr verbunden ist, um durch das Einfüllrohr (39) hindurch eine Füllung zuzuführen, so dass die durch die Austrittsdüsenöffnung hindurch extrudierte Kaugummischnur (40) geformt ist, um einen mit der Füllung gefüllten Kanal aufzuweisen.

7. Die Vorrichtung gemäß Anspruch 6, wobei die Füllung flüssig ist und die Zuführvorrichtung eine Zahnradpumpe (35) aufweist.

8. Die Vorrichtung gemäß irgendeinem vorhergehenden Anspruch, ferner eine Mehrzahl von reibungsarmen Führungen (148) aufweisend, die eingerichtet und angeordnet sind, um die Kaugummischnüre (40) in die Kalibrierungsrollen (152) zu führen, wobei jede reibungsarme Führung (148) einen Kanal oder eine Nut aufweist, die in einem Element ausgebildet ist, das eine Schnurkontaktierungsfläche aufweist, die aus einem reibungsarmen Material hergestellt ist.

9. Die Vorrichtung gemäß Anspruch 8, ferner eine Mehrzahl von reibungsarmen Führungen (148) aufweisend, die eingerichtet und angeordnet sind, um die Kaugummischnüre aus den Kalibrierungswalzen (152) in die Schneidwalzen (160) zu führen, wobei jede reibungsarme Führung einen Kanal oder eine Nut aufweist, die in einem Element ausgebildet ist, das eine Schnurkontaktierungsfläche aufweist, die aus einem reibungsarmen Material hergestellt ist.

10. Die Vorrichtung gemäß irgendeinem vorhergehenden Anspruch, wobei der Kühltunnel (110) einen mehrgeschossigen Kühltunnel aufweist, der eine Reihe von einzelnen Bandförderern (118) aufweist, die sich jeweils im Wesentlichen horizontal und parallel zu der Maschinenrichtung und in einer vertikalen Richtung im Abstand voneinander erstrecken, so dass die Bandförderer im Wesentlichen in einer vertikalen Ebene liegen, wobei die Bandförderer (118) aufweisen: einen obersten Bandförderer (118a) und einen untersten Bandförderer (118k), die sich jeweils in der Maschinenrichtung bewegen, und mindestens einen dazwischen liegenden Bandförderer (118b bis 118j), der zwischen dem obersten und dem untersten Bandförderer angeordnet ist, wobei sich jeder Bandförderer in einer Richtung entgegengesetzt zu dem unmittelbar vorangehenden Bandförderer bewegt, und wobei die Kaugummischnur (40) serpentinenartig durch den Kühltunnel gefädelt ist, so dass die Kaugummischnur entlang einem der Bandförderer, der sich in der Maschinenrichtung bewegt, und dann entlang einem oder mehr darauffolgenden der Bandförderer befördert wird, wobei sie von dem untersten Bandförderer aus schließlich den Kühltunnel verlässt.

11. Die Vorrichtung gemäß irgendeinem vorhergehenden Anspruch, ferner eine Endkühlvorrichtung (190) zum Kühlen der Kaugummistücke aufweisend, wobei die Endkühlvorrichtung einen mehrgeschossigen Kühltunnel aufweist.

12. Ein Verfahren zum Herstellen von Kaugummistücken, aufweisend die folgenden Schritte:
Extrudieren einer Mehrzahl von Kaugummischnüren (40) mittels eines Extruders (30), der eine Mehrzahl von horizontal im Abstand voneinander angeordneten Austrittsdüsenöffnungen (38) aufweist, durch die eine geschmolzene Kaugummizusammensetzung unter Druck hindurchgepresst wird, um die Mehrzahl von getrennten Kaugummischnüren (40) aus den Austrittsdüsenöffnungen zu extrudieren,
Leiten der Kaugummischnüre aus dem Extruder in einen Kühltunnel (110), in dem die Kaugummischnüre gekühlt werden, und
Kalibrieren der Querschnittsgröße und der Form der gekühlten Kaugummischnüre als Vorbereitung zum Schneiden mittels eines Paares von drehbar angetriebenen Kalibrierungswalzen (152), die die Mehrzahl von Kaugummischnüren gleichzeitig dazwischen aufnehmen, wobei sich die Kaugummischnüre parallel zueinander und in horizontalem Abstand voneinander erstrecken, und
Schneiden der kalibrierten Kaugummischnüre in Stücke mittels eines Paares von drehbar angetriebenen Schneidwalzen (160), die die Mehrzahl von Kaugummischnüren gleichzeitig dazwischen aufnehmen, wobei sich die Kaugummischnüre parallel zueinander und horizontal im Abstand voneinander erstrecken, wobei die Schneidwalzen eine Mehrzahl von Sätzen von Schneidezähnen definieren, so dass die Kaugummischnüre gleichzeitig in Kaugummistücke geschnitten werden,
wobei die Kaugummischnüre extrudiert im Wesentlichen die gleiche Querschnittsgröße und Form wie die Kaugummischnüre haben, die in die Schneidwalzen eintreten.

13. Das Verfahren gemäß Anspruch 12, wobei die Kaugummischnüre (40) durch eine Mehrzahl von reibungsarmen Führungen (148) in die Kalibrierungswalzen geführt werden.

14. Das Verfahren gemäß Anspruch 12, wobei die Kaugummischnüre (40) durch eine Mehrzahl von reibungsarmen Führungen (148) aus den Kalibrierungswalzen in die Schneidwalzen geführt werden.

15. Das Verfahren gemäß Anspruch 12, wobei die Kaugummischnüre (40) durch Vorwärtsbewegen der Kaugummischnüre in Längsrichtung entlang einem Serpentinenpfad durch einen Kühltunnel (110) hindurch gekühlt werden, wobei der Serpentinenpfad im Wesentlichen in einer vertikalen Ebene liegt.

16. Das Verfahren gemäß Anspruch 15, wobei bewirkt wird, dass sich die Kaugummischnüre (40) den Serpentinenpfad mittels einer Reihe von vertikal im Abstand voneinander angeordneten horizontalen Bandförderern (118a bis 118k) entlangbewegen, wobei sich jeder in einer horizontalen Richtung entgegengesetzt zu derjenigen des unmittelbar vorhergehenden Bandförderers bewegt.

17. Das Verfahren gemäß Anspruch 12, aufweisend das gleichzeitige Extrudieren einer Mehrzahl von getrennten gefüllten Kaugummischnüren (40), wobei jede Kaugummischnur einen inneren Kanal aufweist, der mit einer Füllung gefüllt ist.

18. Das Verfahren gemäß Anspruch 17, wobei die Füllung eine Flüssigkeit ist und wobei eine Zahnradpumpe (34) verwendet wird, um die Füllung in die aus dem Extruder extrudierten Kaugummischnüre einzuspeisen.

## Revendications

1. Appareil (20) pour fabriquer des morceaux de gomme à mâcher, comprenant :
un extrudeur (30) comprenant une tête d'extrudeur (32) qui définit plusieurs orifices de filière (38) espacés horizontalement par lesquels une composition de gomme fondue est poussée sous pression en vue de l'extrusion de plusieurs boudins de gomme distincts (40) à partir des orifices ;
un tunnel de refroidissement (110) structuré et conçu pour recevoir les boudins de gomme (40) à leur sortie de l'extrudeur (30) et pour les refroidir ; et
une découpeuse (150) structurée et conçue pour recevoir les boudins de gomme refroidis, à leur sortie du tunnel de refroidissement, la découpeuse comprenant une paire de rouleaux de calibrage (152) entraînés en rotation qui reçoivent entre eux, simultanément, les boudins de gomme (40) qui s'étendent parallèlement et sont espacés horizontalement les uns des autres, de manière à calibrer la taille et la forme de section transversale des boudins de gomme en vue du découpage, et une paire de rouleaux de découpage (160) entraînés en rotation qui reçoivent entre eux, simultanément, les boudins de gomme (40) calibrés qui s'étendent parallèlement et sont espacés horizontalement les uns des autres, les rouleaux de découpage définissant plusieurs séries de dents de découpage (162) de telle sorte que les boudins de gomme soient découpés simultanément en morceaux de gomme ;
étant précisé que les boudins de gomme (40), une fois extrudés, ont globalement la même taille et forme de section transversale que les boudins de gomme qui entrent dans les rouleaux de découpage (160).

2. Appareil de la revendication 1, étant précisé que chaque rouleau de découpage comprend un rouleau (160) d'où plusieurs dents de découpage (162) espacées sur la circonférence dépassent chacune radialement vers l'extérieur.

3. Appareil de la revendication 2, étant précisé que chaque dent de découpage (162) a une surface de découpage et d'étanchéité radialement extérieure (164) qui est globalement parallèle à un axe de rotation du rouleau de découpage.

4. Appareil de la revendication 3, étant précisé que chaque dent de découpage (162) a des surfaces biseautées (166) qui bordent la surface de découpage et d'étanchéité.

5. Appareil de la revendication 3, étant précisé qu'entre des dents de découpage (162) voisines, chaque rouleau de découpage est concave dans un sens radialement vers l'extérieur.

6. Appareil de l'une quelconque des revendications précédentes, conçu pour produire des morceaux de gomme fourrée et comprenant par ailleurs un mécanisme de fourrage central avec un tube de fourrage (39) qui traverse un orifice de filière (38) de l'extrudeur (30), et un dispositif d'alimentation (35) relié au tube de fourrage (39) pour amener dans celui-ci un fourrage, de sorte que le boudin de gomme (40) extrudé par l'orifice de filière est formé de manière à présenter un conduit rempli avec le fourrage.

7. Appareil de la revendication 6, étant précisé que le fourrage est liquide et le dispositif d'alimentation comprend une pompe à engrenages (35).

8. Appareil de l'une quelconque des revendications précédentes, comprenant par ailleurs plusieurs guides à faible frottement (148) qui sont structurés et conçus pour guider les boudins de gomme (40) jusque dans les rouleaux de calibrage (152), chaque guide à faible frottement (148) comprenant un conduit ou une cannelure formé dans un élément qui présente une surface de contact avec le boudin composée d'un matériau à faible frottement.

9. Appareil de la revendication 8, comprenant par ailleurs plusieurs guides à faible frottement (148) qui sont structurés et conçus pour guider les boudins de gomme, à leur sortie des rouleaux de calibrage (152), jusque dans les rouleaux de découpage (160), chaque guide à faible frottement comprenant un conduit ou une cannelure formé dans un élément qui présente une surface de contact avec le boudin composée d'un matériau à faible frottement.

10. Appareil de l'une quelconque des revendications précédentes, étant précisé que le tunnel de refroidissement (110) comprend un tunnel de refroidissement à plusieurs niveaux qui comporte une série de convoyeurs à bande individuels (118) qui s'étendent chacun globalement à l'horizontale et parallèlement au sens de la machine et qui sont espacés les uns des autres dans un sens vertical, de telle sorte que les convoyeurs à bande se trouvent globalement dans un plan vertical, les convoyeurs à bande (118) contenant un convoyeur à bande supérieur (118a) et un convoyeur à bande inférieur (118k) qui circulent chacun dans le sens de la machine, et au moins un convoyeur à bande intermédiaire (118b-118j) disposé entre les convoyeurs supérieur et inférieur, étant précisé que chaque convoyeur à bande circule dans un sens opposé au sens du convoyeur immédiatement précédent, et que le boudin de gomme (40) passe dans le tunnel de refroidissement suivant un tracé tortueux, de telle sorte qu'il longe l'un des convoyeurs à bande qui circule dans le sens de la machine, puis un ou plusieurs convoyeurs à bande suivants, pour sortir enfin du tunnel de refroidissement à partir du convoyeur à bande inférieur.

11. Appareil de l'une quelconque des revendications précédentes, comprenant par ailleurs un dispositif de refroidissement final (190) pour refroidir les morceaux de gomme, le dispositif de refroidissement final comprenant un tunnel de refroidissement à plusieurs niveaux.

12. Procédé pour fabriquer des morceaux de gomme à mâcher, comprenant les étapes qui consistent :
à extruder plusieurs boudins de gomme (40) à l'aide d'un extrudeur (30) qui présente plusieurs orifices de filière (38) espacés horizontalement par lesquels une composition de gomme fondue est poussée sous pression en vue de l'extrusion des boudins de gomme distincts (40) à partir des orifices ;
à faire passer les boudins de gomme de l'extrudeur à un tunnel de refroidissement (110) dans lequel ils sont refroidis ; et
à calibrer la taille et la forme de section transversale des boudins de gomme refroidis pour les préparer au découpage, à l'aide d'une paire de rouleaux de calibrage (152) entraînés en rotation qui reçoivent entre eux, simultanément, les boudins de gomme qui s'étendent parallèlement et sont espacés les uns des autres ; et
à découper en morceaux les boudins de gomme calibrés, à l'aide d'une paire de rouleaux de découpage (160) entraînés en rotation qui reçoivent entre eux, simultanément, les boudins de gomme qui s'étendent parallèlement et sont espacés les uns des autres, les rouleaux de découpage définissant plusieurs séries de dents de découpage de telle sorte que les boudins de gomme soient découpés simultanément en morceaux de gomme ;
étant précisé que les boudins de gomme, une fois extrudés, ont globalement la même taille et forme de section transversale que les boudins de gomme qui entrent dans les rouleaux de découpage.

13. Procédé de la revendication 12, étant précisé que les boudins de gomme (40) sont guidés jusque dans les rouleaux de calibrage par plusieurs guides à faible frottement (148).

14. Procédé de la revendication 12, étant précisé que les boudins de gomme (40) sont guidés, à leur sortie des rouleaux de calibrage, jusque dans les rouleaux de découpage par plusieurs guides à faible frottement (148).

15. Procédé de la revendication 12, étant précisé que les boudins de gomme (40) sont refroidis grâce à leur déplacement longitudinal suivant un tracé tortueux, à travers un tunnel de refroidissement (110), le tracé tortueux étant situé globalement dans un plan vertical.

16. Procédé de la revendication 15, étant précisé que les boudins de gomme (40) sont amenés à suivre le tracé tortueux par une série de convoyeurs à bande horizontaux (118a-118k) espacés verticalement qui circulent chacun dans un sens horizontal opposé au sens du convoyeur immédiatement précédent.

17. Procédé de la revendication 12, comprenant l'extrusion simultanée de plusieurs boudins de gomme distincts (40), chaque boudin de gomme ayant un conduit interne fourré avec un fourrage.

18. Procédé de la revendication 17, étant précisé que le fourrage est liquide et qu'une pompe à engrenages (34) est employée pour amener le fourrage dans les boudins de gomme qui sont en cours d'extrusion dans l'extrudeur.
